# EUROPÄISCHE PATENTSCHRIFT

(11) **EP 4 349 225 B1**
(45) Veröffentlichungstag und Bekanntmachung des Hinweises auf die Patenterteilung: **03.12.2025**
(21) Anmeldenummer: 22200029.1
(22) Anmeldetag: 06.10.2022
(51) Int. Cl.: A47J 36/32, A47J 37/06

(54) **GARVORRICHTUNG ZUM GAREN, VERFAHREN UND COMPUTERPROGRAMMPRODUKT**
COOKING DEVICE, METHOD AND COMPUTER PROGRAM PRODUCT
APPAREIL DE CUISSON, PROCÉDÉ ET PRODUIT DE PROGRAMME INFORMATIQUE

(43) Veröffentlichungstag der Anmeldung: 10.04.2024
(73) Patentinhaber: Vorwerk & Co. Interholding GmbH, 42270 Wuppertal (DE)
(72) Erfinder: Kvesic, Mirko, 44117 Wuppertal (DE); Nezami, Amin, 42369 Wuppertal (DE); Holz, Lisa, 42113 Wuppertal (DE); Stritzel, Nico, 44137 Dortmund (DE); Lessel, Thomas, 42551 Velbert (DE); Lenart, Laura, 42389 Wuppertal (DE)
(74) Vertreter: Bals & Vogel Patentanwälte PartGmbB

(56) Entgegenhaltungen:
- EP-A1- 2 268 101
- WO-A1-2015/062859
- DE-A1- 102013 021 356
- US-A1- 2010 050 884
- US-A1- 2018 146 822
- US-A1- 2021 356 134

## Beschreibung

Die Erfindung betrifft eine Garvorrichtung, ein Verfahren, sowie ein Computerprogrammprodukt.

Zur Zubereitung von Speisen ist eine ganze Reihe von Gargeräten bekannt. Je nachdem, welche Art des Garen zum Einsatz kommen soll, unterscheiden sich die Vorrichtungen dabei erheblich. Das Dokument DE 10 2013 021356 A1 offenbart einen Tiegelboden eines Tiegels zum Garen von Speisen.

Dabei bestehen in zunehmendem Maße die Anforderungen, bei gleichbleibender Qualität des Garvorgangs Energie zu sparen. Darüber hinaus ist es ebenfalls wichtig, möglichst wenige Gerüche, welche beim Kochen entstehen können, von der Vorrichtung zum Garen in die Umgebung abzugeben.

Das Kocherlebnis sollte außerdem für den Benutzer insgesamt möglichst einfach und ohne besondere Kenntnisse ermöglicht werden.

Garvorrichtungen, insbesondere Vorrichtungen zum Grillen von Gargut, wie sie aus dem Stand der Technik bekannt sind, haben oftmals den Nachteil, dass diese es für den Benutzer oftmals nicht einfach machen, den gewünschten Garpunkt des Gargutes zu erkennen.

Darüber hinaus kann sich eine erhebliche Rauch- und Geruchsentwicklung bei der Zubereitung von Speisen ergeben. Diese werden insbesondere bei Tisch- und Elektrogrills einfach in die Umgebung abgegeben, sodass ein Betrieb solcher Geräte entweder mit einer erheblichen Beeinflussung der Raumatmosphäre oder nur draußen stattfinden kann.

Der Energieverbrauch der bekannten Geräte im Stand der Technik ist zudem in der Regel recht hoch, da viele der Geräte lediglich über einen einzelnen Netzschalter und maximal einen Temperaturwahlschalter verfügen, sodass stets an der gesamten verfügbaren Fläche zum Erwärmen des Gargutes die gleiche elektrische Leistung verbraucht wird, unabhängig davon, wie viel Gargut tatsächlich erwärmt werden soll.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, eine Garvorrichtung, ein Verfahren, sowie ein Computerprogrammprodukt bereitzustellen, bei dem der Energieverbrauch und/oder Kosten, und/oder die Geruchsbildung reduziert, und das Kocherlebnis insgesamt verbessert und/oder vereinfacht wird.

Die voranstehende Aufgabe wird gelöst durch eine Garvorrichtung mit den Merkmalen des Anspruchs 1, ein Verfahren mit den Merkmalen des Anspruchs 11 sowie ein Computerprogrammprodukt mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Garvorrichtung beschrieben sind, selbstverständlich auch im Zusammenhang mit dem erfindungsgemäßen Verfahren und/oder dem erfindungsgemäßen Computerprogrammprodukt und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist eine Garvorrichtung zum Garen, insbesondere zum Grillen, von Gargut, vorgesehen, aufweisend:
- zumindest zwei Kontaktflächen die dazu ausgeführt sind, mit dem Gargut in Kontakt zu kommen,
- eine Gargutsensorik, die dazu ausgeführt ist, zu erkennen, mit welcher der zumindest zwei Kontaktflächen das Gargut in Kontakt steht,
wobei die zumindest zwei Kontaktflächen individuell elektrisch antreibbar (beheizbar) sind, um das Gargut zu erhitzen, und nur diejenigen der zumindest zwei Kontaktflächen elektrisch angetrieben werden, die mit dem Gargut in Kontakt stehen.

Mit anderen Worten kann gemäß der Erfindung eine Vorrichtung zum Zubereiten von Speisen vorgesehen sein, wobei die Vorrichtung zumindest zwei Abschnitte aufweist, welche dazu ausgeführt sind, mit zuzubereitenden Lebensmitteln in Kontakt zu kommen, sowie eine Detektionseinheit, welche dazu ausgeführt ist, zu bestimmen, welcher der zumindest zwei Abschnitte mit einem zuzubereitenden Lebensmittel in Kontakt steht, wobei lediglich diejenigen der zumindest zwei Abschnitte mithilfe elektrischer Energie geheizt werden, auf denen tatsächlich ein zuzubereitendes Lebensmittel angeordnet ist.

Unter einer Garvorrichtung kann im Rahmen der vorliegenden Erfindung prinzipiell jede Vorrichtung verstanden werden, welche dazu geeignet ist, Lebensmittel zu garen.

Unter Garen kann die Behandlung von Lebensmitteln mit Wärme verstanden werden, wobei insbesondere durch das Garen zumindest die Konsistenz, der Geschmack, die Vertraulichkeit und oder die gesundheitliche Wirkung des Lebensmittels beeinflussbar ist. Die Wärme kann in Form von Kochen, Dampfgaren, Dünsten, Garziehen, Schmoren, Braten und/oder Grillen auf das Lebensmittel übertragen werden.

Im Sinne der Erfindung kann unter Grillen eine Behandlung von Lebensmitteln mit Wärme verstanden werden, bei der das Gargut mit Wärmestrahlung und/oder durch den Kontakt zu einer heißen Oberfläche gegart wird. Dabei kann insbesondere vorgesehen sein, dass während des Grillens Röststoffe im Zusammenhang mit der Maillard-Reaktion entstehen. Eine Maillard-Reaktion kann eine nicht enzymatische Bräunungsreaktion sein, bei der Aminverbindungen mit reduzierenden Verbindungen unter Hitzeeinwirkung zu neuen Verbindungen umgewandelt werden.

Bei einem Gargut kann es sich um jedwedes Lebensmittel handeln, welches durch eine Wärmebehandlung beeinflusst werden und hierdurch zumindest eine Eigenschaft des Lebensmittels in Bezug auf den Verzehr verbessert werden kann. Insbesondere kann es sich bei dem Gargut um Fleisch und/oder ein Gemüse und/oder Obst handeln.

Eine Kontaktfläche kann eine Oberfläche eines räumlich körperlichen Gegenstandes sein, welche dazu geeignet ist, in Kontakt mit Gargut gebracht werden zu können. Weitere Einzelheiten der Kontaktflächen werden auch im Zusammenhang mit den Unteransprüchen näher erläutert. Neben dem reinen Kontakt bringen des Gargutes mit der Kontaktfläche kann die Kontaktfläche ebenfalls dazu ausgeführt sein, das Gargut zu halten. Darunter kann verstanden werden, dass das Gargut in einer stabilen Lage auf der Kontaktfläche angeordnet werden kann. Hierzu kann vorgesehen sein, dass die zumindest zwei Kontaktflächen in einer gemeinsamen Kontaktebene angeordnet sind. Mit anderen Worten können die Ebenenvektoren der beiden zumindest zwei Kontaktflächen parallel zueinander sein.

Im Zusammenhang mit der Erfindung soll unter dem Ausdruck "zumindest zwei" verstanden werden, dass zwei oder mehr der jeweiligen Entität vorliegen. Wenn beispielsweise von "zumindest zwei Kontaktflächen" die Rede ist, sind zwei oder mehr Kontaktflächen vorgesehen. Es kann auch vorgesehen sein, dass drei, vier oder eine Vielzahl von Kontaktflächen vorgesehen sind.

Unter "in Kontakt zu kommen" kann verstanden werden, dass das Gargut die Kontaktfläche (direkt) berührt. Das kann bedeuten, dass sich kein weiterer Gegenstand zwischen dem Gargut und der Kontaktfläche befindet. Ein gewöhnliches Glaskochfeld mit einem Topf wäre beispielsweise nicht unter einer Kontaktfläche im Sinne der Erfindung zu verstehen, da sich zwischen der wärmenden Kontaktfläche (der Widerstandsheizung unterhalb des Glases) noch die Glasplatte sowie der Boden des Topfes befinden.

Unter einer Gargutesensorik kann eine Baugruppe oder Vorrichtung verstanden werden, welche dazu geeignet ist, zumindest das Vorhandensein von Gargut auf zumindest einer der zumindest zwei Kontaktflächen zu bestimmen. Hierzu kann die Gargutesensorik zumindest einen Sensor aufweisen. Nähere Details zur Sensorik der Gargutesensorik werden nachfolgend noch beschrieben. Es kann zu dem vorgesehen sein, dass die Gargutesensorik neben Sensoren auch eine zugeordnete Auswerteelektronik und/oder eine Steuereinheit aufweist, um die erfassten Informationen weiter zu verarbeiten, weiterzugeben und/oder für die erfassten Informationen spezifische Steuersignale auszusenden.

Bei dem Erkennen, mit welcher der zumindest zwei Kontaktflächen das Gargut in Kontakt steht, kann es sich um jedwede Art von Vorgang handeln, bei dem eine Kontaktinformation ermittelt wird, welche angibt, ob das Gargut in Kontakt mit der Kontaktfläche steht. Beispielsweise kann erkannt werden, ob das Gargut auf der ersten der zumindest zwei Kontaktflächen und/oder auf der zweiten der zumindest zwei Kontaktflächen aufliegt. Es kann bei zwei Kontaktflächen sein, dass das Gargut auf einer, beiden oder keiner der zumindest zwei Kontaktflächen aufliegt. Bei mehr als zwei Kontaktflächen kann das Gargut auf keiner, einer oder mehreren Kontaktflächen aufliegen. Die Erkennung selbst kann auf unterschiedliche Art und Weise mithilfe der Gargutsensorik durchgeführt werden. Ausdrücklich nicht mit der Erkennung gemeint ist, dass ein Benutzer selbst feststellt, welche Kontaktflächen mit dem Gargut in Kontakt sind. Dies schließt jedoch wiederum nicht aus, dass ein Benutzer über eine Eingabevorrichtung einzelne Kontaktflächen manuell bedienen, zum Beispiel Ein- und/oder Ausschalten und/oder die Temperatur regeln, könnte.

Unter "individuell elektrisch antreibbar" kann im Zusammenhang mit der vorliegenden Erfindung verstanden werden, dass die einzelnen Kontaktflächen unabhängig voneinander elektrisch betrieben (beheizt) werden können. Mit anderen Worten kann die Heizfunktion der Kontaktflächen einzeln (durch die Steuereinheit) gesteuert werden. Bei zwei Kontaktflächen kann beispielsweise lediglich eine der beiden Kontaktflächen angetrieben sein, sodass nur die angetriebene der beiden Kontaktflächen das Gargut erwärmt. Es können jedoch auch beide oder keine der Kontaktflächen angetrieben sein, je nachdem, auf welche der Kontaktflächen das Gargut aufliegt. Bei drei oder mehr Kontaktflächen können eine oder mehrere Kontaktflächen angetrieben sein, um das Gargut zu erwärmen. Es kann auch keine der mehreren Kontaktflächen in Betrieb sein, wenn kein Gargut auf den Kontaktflächen vorhanden ist.

Erhitzen kann bedeuten, dem Gargut Wärmeenergie aus elektrischer Energie zuzuführen. Dabei ist die zugeführte aus elektrischer Energie gewonnene Wärmeenergie in der Regel größer als die Wärmeenergie, die durch die Umgebung dem Gargut zugeführt wird. Mit anderen Worten kann das Gargut aktiv erhitzt werden, und nicht nur einem Temperaturausgleich mit der Umgebung ausgesetzt sein.

Die Erhitzung kann auf der gesamten Kontaktfläche oder auf einer Heizzone der Kontaktfläche stattfinden. Die Heizzone kann ein Bereich sein, der kleiner ist als die Kontaktfläche. Die Heizzone kann beispielsweise ein Bereich sein, in dem eine Widerstandsheizung (an oder in der Kontaktfläche) vorgesehen ist, welche dazu ausgeführt ist, elektrischen Strom in Wärmeenergie umzuwandeln und diese an das Gargut abzugeben.

Eine solche Widerstandsheizung kann sowohl über die gesamte Kontaktfläche als auch auf Teilen der Kontaktfläche, die eine oder mehrere Heizzonen bilden, vorgesehen sein. Statt einer Widerstandsheizung können noch andere Formen von elektrisch beschreibbaren Heizungen vorgesehen sein, welche im Folgenden noch näher erläutert werden.

Es kann vorgesehen sein, dass die Garvorrichtung Teil einer Küchenmaschine, insbesondere als ein Aufsatz einer Küchenmaschine ausgeführt ist. Die Küchenmaschine kann weitere Funktionen, insbesondere zumindest Mixen und Heizen von Lebensmitteln in einem Behälter, bereitstellen. Hierdurch wird der Vorteil erreicht, dass der Benutzer ein bestehendes System um Funktionalität erweitern und damit das Kocherlebnis verbessern kann.

Insgesamt wird durch die erfindungsgemäße Garvorrichtung der Vorteil erreicht, dass der Energieverbrauch gegenüber bekannten Garvorrichtungen reduziert wird. Dieser Vorteil kann dadurch erreicht werden, dass nur diejenigen Kontaktflächen in Betrieb sind, auf denen auch tatsächlich Gargut aufliegt. Alle übrigen Kontaktflächen sind deaktiviert, sodass dort auch keine Energie verbraucht wird.

Auch der direkte Kontakt zwischen Gargut und Kontaktflächen ist für eine Reduktion des Energieverbrauchs vorteilhaft. Durch diesen direkten Kontakt geht keine oder nur minimal Energie bei dem Übergang zwischen der aktiv wärmenden Vorrichtung und dem Gargut verloren.

Durch die Reduktion der abgestrahlten Hitze von nicht mit Gargut in Kontakt stehenden Flächen wird zudem das Kocherlebnis für den Benutzer verbessert, da die erzeugte Wärme auch tatsächlich das Gargut erreicht und somit leichter zu dosieren ist. Darüber hinaus entstehen weniger Wrasen (Dämpfe vom Gärungsprozess). Diese können nämlich beispielsweise auch durch Flüssigkeit hervorgerufen werden, welche von dem Gargut auf eine andere Kontaktfläche abgegeben und dort erhitzt wird, ohne dass sich auch Gargut auf dieser Kontaktfläche befindet.

Weiterhin kann bei einer erfindungsgemäßen Garvorrichtung vorteilhafterweise vorgesehen sein, dass zumindest eine der zumindest zwei Kontaktflächen zumindest zwei Heizzonen aufweist, welche elektrisch antreibbar (beheizbar) sind, um das Gargut zu erhitzen, und nur diejenigen Heizzonen elektrisch angetrieben werden, die mit dem Gargut in Kontakt stehen.

Mit anderen Worten kann pro Kontaktfläche mehr als eine Heizzone vorgesehen sein, wobei die Heizzonen derart ausgeführt sind, dass diese einzeln antreibbar sind.

Hierdurch wird der Vorteil erreicht, dass das Gargut auch innerhalb einer Kontaktfläche dort erhitzt werden kann, wo das Gargut mit einer entsprechenden Heizzone in Kontakt steht.

Es kann vorgesehen sein, dass die Gargutsensorik dazu ausgeführt ist, zu erkennen mit welcher der zumindest zwei Heizzonen einer der zumindest zwei Kontaktflächen (tatsächlich) in Kontakt steht, und die zumindest zwei Heizzonen individuell elektrisch antreibbar sind, um das Gargut zu erhitzen, und nur diejenigen der zumindest zwei Heizzonen elektrisch angetrieben werden, die mit dem Gargut in Kontakt stehen.

So können ganz gezielt nur diejenigen Heizzonen betrieben werden, welche mit dem Gargut (tatsächlich) in Kontakt stehen. Hierdurch wird eine weitere Reduktion des Energieverbrauchs ermöglicht.

Ferner kann bei einer erfindungsgemäßen Garvorrichtung vorteilhafterweise vorgesehen sein, dass die Gargutsensorik zumindest einen Gewichtssensor umfasst, der dazu ausgeführt ist, das auf zumindest einer der zumindest zwei Kontaktflächen lastende Gewicht zu bestimmen, und/oder dass die Gargutsensorik zumindest einen Dehnungsmessstreifen umfasst, der dazu ausgeführt ist, die Durchbiegung zumindest einer der zumindest zwei Kontaktflächen zu bestimmen.

Die genannten Beispiele von Gewichtssensor und Dehnungsmessstreifen bilden keine abschließende Liste von möglichen Sensoren, welche der Gargutsensorik ermöglichen, zu bestimmen, ob Gargut auf einer Kontaktfläche und oder auf einer Heizfläche aufliegt. Es können weitere im Stand der Technik bekannte Sensoren für das Vorhandensein der Erkennung, ob sich ein Gegenstand in einem bestimmten Bereich befindet, vorgesehen sein. Beispielsweise kann ein, insbesondere kapazitiver, Berührungssensor, ein Ultraschallsensor, und/oder eine Kamera vorgesehen sein.

Ein Gewichtssensor bietet den Vorteil, dass das Vorhandensein von Gargut auf der Kontaktfläche und/oder der Heizzone auf einfache Art und Weise sowie kostengünstig bestimmt werden kann. Darüber hinaus kann der Gewichtssensor zusätzlich noch die Information liefern, welches Gewicht das mit der Kontaktfläche und/oder der Heizzone in Kontakt stehende Gargut aufweist. Diese Gewichtsinformation kann beispielsweise für das Garen des Gargutes verwendet werden. Ein weniger schweres Gargut kann beispielsweise kürzer gegart werden als ein schweres Gargut, sodass durch die korrekte Erkennung des Gewichtes des Gargutes zum einen Energie eingespart und zum anderen das Kochergebnis verbessert werden kann.

Es kann vorgesehen sein, dass zumindest ein Gewichtssensor an zumindest einem Ende einer Kontaktfläche, insbesondere unterhalb der Kontaktfläche, vorgesehen ist. Hierdurch wird der Vorteil erreicht, dass der Gewichtssensor nicht direkt mit dem Gargut in Kontakt kommt, sodass die Reinigung der Kontaktfläche bzw. der Garvorrichtung insgesamt erleichtert wird. Es kann ebenfalls vorgesehen sein, dass für jede Heizzone jeweils ein Gewichtssensor vorhanden ist. Hierdurch wird der Vorteil erreicht, dass die Gewichtsverteilung des Gargutes innerhalb der Kontaktfläche genau bestimmt und die Beheizung des Gargutes entsprechend der Gewichtsverteilung optimiert werden kann. Auch hierdurch lässt sich Energie sparen und das Kochergebnis verbessern.

Auch durch einen Dehnungsmessstreifen lässt sich neben der Information, ob Gargut auf der Kontaktfläche und/oder der Heizzonen aufliegt, auch die Information bestimmen, welches Gewicht das Gargut an einer bestimmten Stelle auf der Kontaktfläche und/oder der Heizzonen hat. Auch hierdurch lässt sich durch eine auf diese Information abgestimmte Beheizung der Kontaktflächen und/oder der Heizzonen weitere Energiesparen und das Kochergebnis verbessern.

Es ist ferner bei einer erfindungsgemäßen Garvorrichtung denkbar, dass die Gargutsensorik ein Thermometer aufweist, welches dazu ausgeführt ist, den Garzustand des Gargutes zu bestimmen, und/oder dass die Gargutsensorik eine Garguterkennung umfasst, die dazu ausgeführt ist, die Art des Gargutes, das mit zumindest einer der Kontaktflächen in Kontakt ist, zu bestimmen.

Mit anderen Worten kann die Gargutsensorik ferner einen Temperatursensor aufweisen, welche dazu ausgeführt ist, eine Temperatur des Gargutes zu messen. Alternativ oder in Ergänzung dazu kann die Gargutsensorik ferner eine Vorrichtung zum Erkennen des Gargutes aufweisen.

Das Thermometer kann berührungslos oder berührend ausgeführt sein. Ein berührungsloses Thermometer, insbesondere ein Pyrometer, bietet den Vorteil, dass die Temperatur des Gargutes gemessen werden kann, ohne dass das Thermometer mit dem Gargut in Kontakt kommen muss. Ist das Gargut, insbesondere dessen Emissivität, und oder die Position des Gargutes auf der Kontaktfläche bekannt, kann zudem eine besonders präzise Messung erfolgen.

Ein berührendes Thermometer bietet den Vorteil, dass dieses besonders kostengünstig und gleichzeitig präzise ist. Darüber hinaus ist eine lokale Messung sowie je nach Ausführung auch eine gemittelte Messung über einen bestimmten Bereich, beispielsweise in der Region einer Heizzone, genau möglich.

Es kann vorgesehen sein, dass das Thermometer als ein Widerstandsthermometer ausgeführt ist, und der Widerstand des Widerstandsthermometers zum Heizen der Heizzone verwendet wird. Hierdurch wird der Vorteil erreicht, dass insgesamt weniger Bauteile verwendet werden müssen und damit Kosten eingespart werden können.

Weiterhin ist bei einer erfindungsgemäßen Garvorrichtung vorgesehen, dass zumindest eine Öffnung vorgesehen ist, die dazu ausgeführt ist, Flüssigkeit von den zumindest zwei Kontaktflächen abzuführen.

Es kann vorgesehen sein, dass die Öffnung an zumindest einer der zumindest zwei Kontaktflächen angeordnet ist. Alternativ oder in Ergänzung dazu kann die Öffnung zwischen zwei der zumindest zwei Kontaktflächen angeordnet sein. Ferner kann auch innerhalb der Kontaktflächen eine Öffnung vorgesehen sein. Ebenfalls kann vorgesehen sein, dass zumindest eine Öffnung an zumindest einem Ende der Kontaktflächen vorgesehen ist.

Die Abgabe von Flüssigkeit durch das Gargut stellt eine Beeinträchtigung des Garvorgangs dar. Dabei wird Energie verbraucht, die nicht für die Erwärmung des Gargutes verwendet wird, und somit verloren geht. Somit bietet eine Öffnung, welche dazu geeignet ist, Flüssigkeit abzuführen den Vorteil, dass weniger Energie verbraucht wird. Zusätzlich kann durch das vermeiden der Ausbildung einer Wasserschicht zwischen dem Gargut und der Kontaktfläche das Garen des Gargutes bzw. das Kochergebnis verbessert werden.

Es ist ferner bei einer erfindungsgemäßen Garvorrichtung denkbar, dass die zumindest eine Öffnung als zumindest eine Flächenöffnung ausgebildet ist, welche zwischen den zumindest zwei Kontaktflächen angeordnet und dazu ausgeführt ist, beim Erhitzen des Gargutes austretende Flüssigkeit abzuführen, und/oder dass die zumindest eine Öffnung als zumindest eine Innenöffnung (durch einen Materialdurchbruch) ausgebildet ist, welche innerhalb zumindest einer der zumindest zwei Kontaktflächen angeordnet und dazu ausgeführt ist, beim Erhitzen des Gargutes austretende Flüssigkeit abzuführen.

Mit anderen Worten kann sowohl vorgesehen sein, dass sich eine Öffnung zwischen zumindest zwei der zumindest zwei Kontaktflächen erstreckt. Alternativ oder ergänzend kann ebenfalls vorgesehen sein, dass eine Öffnung innerhalb der zumindest zwei Kontaktflächen ausgebildet ist.

Die Anordnung zwischen zwei Kontaktflächen, also eine Flächenöffnung, bietet den Vorteil, dass diese nur durch den Abstand der Kontaktflächen zueinander begrenzt ist und davon abgesehen je nach Anwendungsfall frei ausgestaltet werden kann.

Bei einer Innenöffnung wird der Vorteil erreicht, dass die Flüssigkeit besonders nah an der Position des Entstehens, z.B. direkt am Gargut, abgeleitet werden kann. Hierdurch wird besonders viel Energie eingespart und das Kochergebnis verbessert.

Weiterhin kann bei einer erfindungsgemäßen Garvorrichtung vorteilhafterweise vorgesehen sein, dass zumindest eine der zumindest zwei Kontaktflächen im Wesentlichen Linienförmig (aus bogenförmigen und/oder geraden Streben) ausgebildet ist und/oder dass zumindest eine der zumindest zwei Kontaktflächen eine Gitterstruktur aufweist.

Mit anderen Worten kann die Form zumindest einer der zumindest zwei Kontaktflächen im Wesentlichen der Form eines Gitterstabes eines Grillrostes entsprechen.

Eine im Wesentlichen Linienförmig ausgebildete Kontaktfläche ist relativ einfach zu fertigen, wodurch die Kosten reduziert werden können. Darüber hinaus kann eine linienförmige Ausgestaltung der Kontaktfläche den Vorteil bieten, dass ein gewohntes Muster auf dem Gargut produziert werden kann, wie es von gewöhnlichen Kohlegrills erzeugt wird. Hierdurch kann das Kochergebnis insgesamt verbessert werden.

Bei linienförmig ausgebildeten Kontaktflächen können Heizzonen entlang der gesamten Kontaktfläche ausgeführt, oder auf Abschnitte der Linie beschränkt sein. Durch das vorsehen von mehreren unabhängig voneinander steuerbaren Heizzonen entlang einer Linie kann insbesondere bei langen Kontaktflächen, die nicht komplett mit Gargut belegt sind, Energie eingespart werden.

Mit Gitterstruktur kann eine sich wiederholende Struktur gemeint sein. Insbesondere kann die Gitterstruktur komplexer als eine (bogenförmige) Linienform der Kontaktfläche ausgeformt sein. Das Gitter kann Vielecke aufweisen, die miteinander verbunden sind. Beispielsweise kann das Gitter die Form einer Honigwabe aufweisen. Derartige Gitterstrukturen bieten den Vorteil, dass Innenöffnungen an diesen Kontaktflächen besonders einfach herstellbar sind, sodass die Kosten für die Garvorrichtung insgesamt reduziert werden können. Ferner können so auch ungewöhnliche, eindrucksvolle Muster auf dem Gargut erzeugt werden, wodurch das Kochergebnis verbessert wird. Auch ist eine Kombination aus Linienform, Gitter und Wabenstruktur für die Kontaktflächen denkbar.

Bei einer Gitterstruktur kann eine oder können mehrere Heizzonen entlang der gesamten Kontaktfläche vorgesehen sein oder Heizzonen auf Abschnitten des Gitters vorgesehen sein. Vorteilhaft kann insbesondere vorgesehen sein, dass eine Heizzone einer Gittereinheit, insbesondere einer Wabe eines Gitters in Wabenform, entspricht. Hierdurch kann eine besonders genaue Abgabe der Heizleistung an das Gargut erfolgen, wodurch Energie eingespart und das Kochergebnis verbessert werden kann.

Weiterhin kann bei einer erfindungsgemäßen Garvorrichtung vorteilhafterweise vorgesehen sein, dass zumindest eine der zumindest zwei Kontaktflächen eine elektrische Widerstandsheizung und/oder eine Strahlungsheizung und/oder eine Dickschichtheizung aufweist.

Bei einer Widerstandsheizung wird Wärme erzeugt, indem ein leitfähiges Material von Strom durchflossen wird und sich durch die Joulesche Wärme erhitzt. Widerstandsheizung sind breit verfügbar und können daher kostengünstig hergestellt werden.

Es kann vorgesehen sein, dass die Widerstandsheizung innerhalb der Kontaktfläche angeordnet ist. Insbesondere kann die Widerstandsheizung von einem spülmaschinenfesten Material, insbesondere Edelstahl, umgeben oder aus diesem gefertigt sein. Durch die Anordnung im Inneren der Kontaktfläche oder einer Fertigung aus spülmaschinenfestem Material wird der Vorteil erreicht, dass die Kontaktfläche insgesamt leicht reinigbar ist.

Eine Strahlungsheizung kann auch als Wärmewellenheizung bezeichnet werden und ist derart ausgeführt, dass die Wärmeabgabe überwiegend durch Strahlung in Form von Wärmestrahlung, insbesondere im Infrarotbereich, erfolgt. Strahlungsheizung bieten den Vorteil, dass diese auch größere Wärmemengen an Gargut abgeben können, ohne dass sich die Temperatur der Strahlungsheizung selbst verringert.

Es kann vorgesehen sein, dass das Strahlungsspektrum der Strahlungsheizung auf zumindest ein Gargut abgestimmt ist. Prinzipiell ist zu jedem Gargut ein optimaler Strahlungsbereich aus dem Strahlungsspektrum, insbesondere der Infrarotstrahlung, bekannt. Das liegt daran, dass die chemische Zusammensetzung des Gargut bekannt ist und das den einzelnen chemischen Gruppen, die das Gargut aufweist, eine maximale Absorptionswellenlänge zugeordnet werden kann. Durch die Abstimmung des Spektrums der Strahlungsheizung auf das Gargut lässt sich eine besonders effiziente Absorption erreichen, wodurch Energie eingespart werden kann.

Es kann ebenfalls vorgesehen sein, dass die Kontaktfläche eine Dickschichtheizung aufweist. Eine Dickschichtheizung funktioniert prinzipiell wie eine Widerstandsheizung, wobei der die elektrische Leistung jedoch in einem Widerstand abfällt, der in Form einer Schicht auf einen Körper aufgetragen ist.

Weiterhin kann bei einer erfindungsgemäßen Garvorrichtung vorteilhafterweise vorgesehen sein, dass die Strahlungsheizung dazu ausgeführt ist, zumindest zwei unterschiedliche Wellenlängen abzustrahlen, wobei insbesondere die Gargutsensorik dazu ausgeführt ist, zumindest eine der zumindest zwei unterschiedlichen Wellenlängen der Strahlungsheizung auszuwählen.

Mit anderen Worten kann die Strahlungsheizung Mittel umfassen, die es der Strahlungsheizung ermöglichen, zumindest zwei unterschiedliche Wellenlängen abzustrahlen, welche insbesondere basierend auf der Detektion der Gargutsensorik gewählt werden können, um dem detektierten Gargut zu entsprechen.

Jedes Lebensmittel bzw. Gargut weist unterschiedliche chemische Gruppen auf, welche wiederum Absorptionswellenlängen aufweisen, bei denen die Strahlung besonders stark absorbiert wird, sodass diese in Wärme umgewandelt wird. Beispielsweise hat eine Hydroxyl-Gruppe eine Absorptionswellenlänge zwischen 2,7 und 3,3 µm, während eine Carbonyl-Gruppe (Ester) eine Absorptionslänge von 5,71-5,76 µm hat.

Es kann ebenfalls vorgesehen sein, dass ein Verhältnis des ausgestrahlten Wärmespektrums dem Verhältnis der vorhandenen chemischen Gruppen des erkannten Gargutes angepasst wird. Hierdurch lässt sich eine besonders effiziente Erwärmung des Gargutes erreichen.

Es kann ferner vorgesehen sein, dass die Strahlungsheizung dazu ausgeführt ist, zumindest eine Wellenlänge auszusenden, die für Proteine und/oder Lipide und/oder Zucker und/oder Wasser spezifisch ist. Die Wellenlänge für Proteine kann insbesondere im Bereich von 3-4 µm und/oder 6-10 µm, die Wellenlänge für Lipide im Bereich von 6-7 µm, die Wellenlänge für Zucker im Bereich von 2,7-3,8 µm und/oder 7-10 µm und die Wellenlänge für Wasser im Bereich von 2,5-3,5 µm und/oder 5,5-6,5 µm liegen. Es kann vorgesehen sein, dass die Wellenlängen für das von der Gargutsensorik bestimmte Verhältnis von Proteinen, Lipiden, Zucker und/oder Wasser aus Daten des detektierten Gargut ausgewählt werden und insbesondere dem bestimmten Verhältnis entsprechen. Hierdurch lässt sich eine besonders effiziente Erwärmung des Gargutes erreichen, wodurch Energie eingespart und das Koch Ergebnis verbessert wird.

Es kann ebenfalls vorgesehen sein, dass die Strahlung derart eingestellt wird, dass nur bestimmte Bestandteile des Garguts erwärmt werden. Beispielsweise kann vorgesehen sein, dass lediglich die Lipide besonders stark erwärmt werden sollen. Hierdurch kann der Vorteil erreicht werden, dass die Lipide verstärkt gegart werden, während übrige Bestandteile des Garguts weniger stark gegart werden.

Im Rahmen der Erfindung ist es weiterhin denkbar, dass eine Absaugung vorgesehen ist, welche dazu ausgeführt ist, beim Garen des Gargutes entstehende Wrasen abzusaugen, und/oder dass eine Haube vorgesehen ist, welche dazu ausgeführt ist, die zumindest zwei Kontaktflächen und mit den Kontaktflächen in Kontakt bringbares Gargut abzudecken.

Mit anderen Worten kann bei der Garvorrichtung eine Vorrichtung vorgesehen sein, welche dazu ausgeführt ist, beim Garen des Garguts aufsteigende Dämpfe und oder Partikel aufzusaugen.

Es kann vorgesehen sein, dass die Absaugung die zumindest zwei Kontaktflächen, insbesondere ringförmig, umgibt. Dadurch wird der Vorteil erreicht, dass die auftretenden Dämpfe und Partikel nahe am Entstehungsort abgesaugt werden können und nicht an die Umgebung abgegeben werden.

Es kann ebenfalls vorgesehen sein, dass eine Öffnung, insbesondere eine Flächenöffnung und oder eine Innenöffnung mit der Absaugung verbunden ist, sodass eine Absaugung von Wrasen über die Öffnungen bzw. die Flächenöffnungen und oder in den Öffnungen erfolgen kann. Dies bietet den Vorteil, dass die Wrasen besonders nahe an dem erwärmten Gargut abgesaugt werden können, wodurch besonders wenig Wrasen an die Umgebung abgegeben werden.

Es kann vorgesehen sein, dass die Absaugung einen Aktivkohlefilter aufweist, welche dazu geeignet ist, angesaugte Luft zu reinigen. Hierdurch wird der Vorteil erreicht, dass wieder in die Atmosphäre abgegebene oder der Garvorrichtung zurückführte Luft gereinigt wird, sodass insgesamt weniger Wrasen in der Atmosphäre verbleiben.

Ferner kann die Absaugung auch einen Kondenswasserbehälter umfassen, welcher dazu ausgeführt ist, kondensierende Flüssigkeit aufzufangen und zu speichern. Hierdurch wird der Vorteil erreicht, dass Flüssigkeit abseits der Kontaktflächen gesammelt wird, sodass dieses nicht unnötig weiter erwärmt wird. Hierdurch lässt sich weitere Energie einsparen.

Ferner kann mit anderen Worten auch eine Abdeckung der Garvorrichtung vorgesehen sein, welche dazu ausgeführt ist, zumindest die Kontaktflächen und das Gargut abzudecken.

Eine Haube bietet den Vorteil, dass Wrasen, welche ausgehend vom Gargut aufsteigen, nicht an die Umgebung abgegeben werden, sondern von der Haube abgefangen werden.

Es kann vorgesehen sein, dass die Haube noch weitere Teile der Garvorrichtung, insbesondere die Absaugung umgibt. Hierdurch wird der Vorteil erreicht, dass von der Probe abfallende Wrasen direkt an die Absaugung geführt werden, sodass diese besonders effizient abgesaugt werden können.

Auch ist es denkbar, dass die Haube aus einem transparenten Material, wie z. B. Glas, ausgeführt ist, wodurch der Vorteil erreicht wird, dass ein Benutzer während des Kochvorgangs den Garzustand des Gargutes beurteilen kann. Hierdurch wird das Kocherlebnis weiter verbessert.

Auch kann es vorgesehen sein, dass die Haube eine (Wärme-)Isolation aufweist. Hierdurch wird weniger Wärme an die Umgebung abgegeben, wodurch weitere Energie eingespart werden kann. Die Haube kann doppelwandig und/oder mit einer wärmestrahlungsreflektierenden Schicht ausgeführt sein. Hierdurch ergibt sich eine gute Wärmeisolation.

Ferner kann die Haube ein Heizelement, insbesondere eine Strahlungsheizung umfassen. Hierdurch kann das Kochergebnis weiter verbessert werden.

Im Rahmen der Erfindung ist es weiterhin denkbar, dass eine Kommunikationsschnittstelle vorgesehen ist, welche dazu ausgeführt ist, Rezepte von einem Server abzurufen und zumindest eine der zumindest zwei Kontaktflächen entsprechend eines abgerufenen Rezeptes zu steuern.

Mit anderen Worten kann die Garvorrichtung eine Sende- und/oder Empfangsvorrichtung aufweisen, welche dazu geeignet ist Daten, die für ein Rezept spezifisch sind, von einer externen Recheneinheit, wie z.B. einem Server, zu empfangen und/oder Daten an einen externen Recheneinheit zu senden.

Durch die Verbindung mit einem externen Server lässt sich der Vorteil erreichen, dass auch über bereits vorabeingespeicherte Rezepte hinaus weitere Rezepte von einem Server abrufen lassen. Hierdurch werden dem Benutzer weitere Möglichkeiten gegeben, Speisen zuzubereiten, wodurch das Kocherlebnis verbessert bzw. ausgeweitet wird.

Es kann vorgesehen sein, dass die auf dem Server hinterlegten Daten eine Maximaltemperatur der Heizelemente, Kerntemperaturen bezogen auf die Garzustände des Gargutes und oder die Dauer des Energieeintrages in Abhängigkeit vom Gargut und/oder der Gargutgröße und/oder dem Gargutgewicht umfassen. Durch derartige auf dem Server hinterlegten Daten lässt sich die Garvorrichtung bzw. die Heizung der Kontaktflächen besonders effizient steuern, sodass einerseits Energie eingespart und andererseits das Kochergebnis verbessert werden kann.

Gemäß einem weiteren Aspekt der Erfindung ist ein Verfahren zum Garen, insbesondere zum Grillen, eines Gargutes, insbesondere mit einer Garvorrichtung nach einem der vorhergehenden Ansprüche, vorgesehen, umfassend:
- In Kontakt bringen eines Gargutes mit zumindest einer von zumindest zwei Kontaktflächen,
- Erkennen, durch eine Gargutsensorik, mit welcher der zumindest zwei Kontaktflächen das Gargut in Kontakt steht,
- Individuelles elektrisches Antreiben, durch die Gargutsensorik, der Kontaktflächen, die als mit dem Gargut in Kontakt stehend Erkannt sind, um das Gargut zu erhitzen.

Mit anderen Worten kann bei einem erfindungsgemäßen Verfahren ein Prozess zum Garen von Gargut vorgesehen sein, der mehrere Schritte umfasst. Zum einen wird das Gargut auf zumindest eine der zumindest zwei Kontaktflächen gelegt, wodurch es zum Kontakt zwischen Gargut und Kontaktflächen kommt. Ferner erkennt die Gargutsensorik, auf welcher der zumindest zwei Kontaktflächen Gargut aufgelegt wurde, sodass beim elektrischen antreiben der Kontaktflächen nur diejenigen Kontaktflächen angetrieben werden, auf denen Gargut als aufgelegt erkannt wurde.

Die Verfahrensschritte können dabei zumindest teilweise gleichzeitig oder zeitlich nacheinander ablaufen, wobei die Reihenfolge der Verfahrensschritte nicht auf die durch die angegebene Reihenfolge begrenzt ist, sodass einzelne Schritte in unterschiedlicher Reihenfolge durchführbar sind.

Mit dem in Kontakt bringen eines Gargutes ist das Auflegen bzw. Bestücken der Kontaktflächen, insbesondere durch einen Benutzer, gemeint, wobei dann das Gargut (nach dem Auflegen) üblicherweise an dieser Stelle der Kontaktfläche verbleibt.

Die Gargutsensorik, welche insbesondere mit im Zusammenhang mit der erfindungsgemäßen Garvorrichtung beschriebenen Elemente ausgestaltet sein kann, erkennt, auf welchen der Kontaktflächen tatsächlich Gargut vorhanden ist. Sollte auf einer Kontaktfläche kein Gargut vorhanden sein, wird diese Kontaktfläche nicht (aktiv) oder zumindest nur vermindert beheizt. Wenn auf einer Kontaktfläche jedoch Gargut ist, wird diese Kontaktfläche (aktiv) beheizt, insbesondere nach Vorgaben eines Rezeptes.

Somit bringt ein erfindungsgemäßes Verfahren die gleichen Vorteile mit sich, wie sie bereits ausführlich mit Bezug auf eine erfindungsgemäße Garvorrichtung beschrieben worden sind.

Vorzugsweise kann bei einem erfindungsgemäßen Verfahren vorgesehen sein, dass ein Auswählen eines Rezeptes, das zumindest das Garen eines Gargutes umfasst, vorgesehen ist, wobei das individuelle elektrische Antreiben der Kontaktflächen spezifisch zu dem im Rezept vorgesehen Gargut ist.

Mit anderen Worten kann sich das Beheizen der Kontaktflächen nach dem zuvor vom Benutzer ausgewählten Rezept richten. Beispielsweise kann das Rezept vorsehen, dass eine besonders starke Beheizung der Kontaktflächen erfolgt, sodass sich eine Maillard-Reaktion am Gargut einstellt und eine Kruste entsteht. Es kann ebenfalls vorgesehen sein, dass eine weniger starke Beheizung einen Kontaktflächen erfolgt, sodass das Gargut mehr Zeit hat, sich gleichmäßig zu erwärmen. Dies kann insbesondere bei größerem und/oder schwererem Gargut vorteilhaft sein.

Ferner kann bei einem erfindungsgemäßen Verfahren vorteilhafterweise vorgesehen sein, dass ein Auswählen einer Garstufe des Gargutes vorgesehen ist, wobei das individuelle elektrische Antreiben der Kontaktflächen spezifisch zu der ausgewählten Garstufe des Gargutes ist.

Mit anderen Worten kann ein Benutzer die Garstufe eines Gargutes auswählen, welche dann entsprechend durch gezieltes Betreiben der Kontaktflächen nach den Vorgaben des Benutzers erreicht wird.

Beispielsweise kann ein Benutzer für ein Steak die Garstufe "medium rare" auswählen. Die Kontaktflächen werden dann so angesteuert, dass die Kerntemperatur des Gargutes (in diesem Fall das Steak) ca. 52 °C entspricht.

Es können auch andere Garstufen wie "blue" (ca. 38 °C), "rare" (ca. 46 °C), "medium" (ca. 55-60 °C), "medium well" (ca. 62 °C) und "well done" (ca. 65-70 °C) vorgesehen sein.

Ferner kann vorgesehen sein, dass die Garstufen nicht mit einer Temperatur, sondern mit einer anderen garstufenspezifischen Größe, wie beispielsweise mit einer Zeit verknüpft sind.

Es kann ebenfalls vorgesehen sein, dass der Benutzer Garstufen selbst festlegen und oder Rezepten zuordnen kann. Hierdurch kann das Kocherlebnis weiter verbessert und/oder individuell angepasst werden.

Es kann vorgesehen sein, dass die Gargutsensorik ein Garmodell erstellt und einer Garstufe aus zumindest einer Art des erkannten Gargutes, der Temperatur der Oberfläche des Gargutes und oder einer Kerntemperatur des Gargutes, und oder einem Gewicht des Gargutes und oder einer Höhe des Gargutes berechnet. Hierdurch wird der Vorteil erreicht, dass eine besonders genaue Erwärmung des Gargutes bis hin zum gewünschten Grat erfolgen kann.

Gemäß einem weiteren Aspekt der Erfindung ist ein Computerprogrammprodukt, vorgesehen, umfassend Befehle, die bewirken, dass eine Steuereinheit (die Teil der Garvorrichtung ist), insbesondere die Vorrichtung nach einem der Ansprüche 1 bis 11, das Verfahren nach einem der Anspruch 12 bis 14 ausführt.

Es kann vorgesehen sein, dass das Computerprogrammprodukt auf einer Steuereinheit, welche insbesondere Teil der Gargutsensorik sein kann, ausgeführt wird. Die Steuereinheit kann jedoch ebenfalls als eigenständiger Teil der Garvorrichtung ausgeführt oder auf einem Server vorgesehen sein, welcher mit der Garvorrichtung, insbesondere über eine Kommunikationsschnittstelle, in Kontakt steht.

Somit bringt ein erfindungsgemäßes Computerprogrammprodukt die gleichen Vorteile mit sich, wie sie bereits ausführlich mit Bezug auf eine erfindungsgemäße Garvorrichtung und/oder ein erfindungsgemäßes Verfahren beschrieben worden sind. Bei dem Verfahren kann es sich insbesondere um ein computerimplementiertes Verfahren handeln.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1:: eine schematische Aufsicht eines Ausführungsbeispiels der Garvorrichtung,
- Figur 2:: eine schematische Ansicht von zwei Kontaktflächen mit mehreren Heizzonen,
- Figur 3:: eine schematische Seitenansicht einer Garvorrichtung mit einer Gargutsensorik,
- Figur 4:: zwei unterschiedliche Ausführungsformen von Kontaktflächen mit Flächen- und Innenöffnungen,
- Figur 5:: eine Ansicht einer Kontaktfläche mit Heizzonen unterschiedlicher Ausführung,
- Figur 6:: ein Diagramm mit Emissions- und Absorptionsspektren, bei denen die Wellenlänge auf der x-Achse und Intensität auf der y-Achse gezeigt ist,
- Figur 7:: eine perspektivische Ansicht einer Garvorrichtung, bei denen Gargut auf einer Kontaktfläche dargestellt ist, sowie
- Figur 8:: eine schematische Übersicht eines Ausführungsbeispiels eines Verfahrens.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

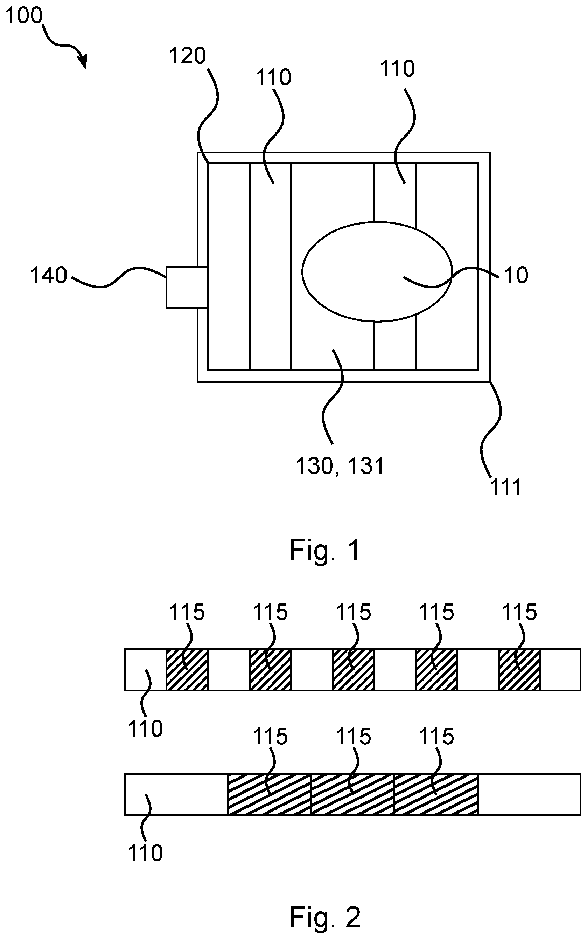

Figur 1 zeigt eine Garvorrichtung 100 zum Garen, insbesondere zum Grillen, von Gargut 10, aufweisend zumindest zwei Kontaktflächen 110 die dazu ausgeführt sind, mit dem Gargut 10 in Kontakt zu kommen, sowie eine Gargutsensorik 140, die dazu ausgeführt ist, zu erkennen, mit welcher der zumindest zwei Kontaktflächen 110 das Gargut 10 in Kontakt steht. Die zumindest zwei Kontaktflächen 110 sind individuell elektrisch antreibbar (beheizbar), um das Gargut 10 zu erhitzen, wobei nur diejenigen der zumindest zwei Kontaktflächen 110 elektrisch angetrieben werden, die mit dem Gargut 10 in Kontakt stehen. In dem in Fig. 1 gezeigten Beispiel wäre dementsprechend nur die Rechte der beiden Kontaktflächen 110 angetrieben (beheizt).

Dadurch, dass das Gargut 10 unmittelbar auf der beheizten Kontaktfläche 110 liegt, kommt es zu einer direkten Wärmeübertragung von der Kontaktfläche 110 auf das aufgelegte Gargut 10.

Insgesamt wird durch die erfindungsgemäße Garvorrichtung 100 der Vorteil erreicht, dass der Energieverbrauch gegenüber bekannten Garvorrichtungen 100 reduziert wird. Dieser Vorteil kann dadurch erreicht werden, dass nur diejenigen Kontaktflächen 110 in Betrieb sind, auf denen auch tatsächlich Gargut 10 aufliegt. Alle übrigen Kontaktflächen 110 sind deaktiviert, sodass dort auch keine Energie verbraucht wird.

Auch der direkte Kontakt zwischen Gargut 10 und Kontaktflächen 110 ist für eine Reduktion des Energieverbrauchs vorteilhaft. Dies wird insbesondere durch eine direkte Wärmeübertragung erreicht. Durch diesen direkten Kontakt geht keine oder nur minimal Energie bei dem Übergang zwischen der aktiv wärmenden Vorrichtung und dem Gargut 10 verloren.

Durch die Reduktion der abgestrahlten Hitze von nicht mit Gargut 10 in Kontakt stehenden Flächen wird zudem das Kocherlebnis für den Benutzer verbessert, da die erzeugte Wärme auch tatsächlich das Gargut 10 erreicht und somit leichter zu dosieren ist. Durch eine smarte Ansteuerung der Kontaktfläche 110 wird das Gargut 10 optimal zubereitet. Darüber hinaus entstehen weniger Wrasen. Diese können nämlich beispielsweise auch durch Flüssigkeit hervorgerufen werden, welche von dem Gargut 10 auf eine andere Kontaktfläche abgegeben und dort erhitzt wird, ohne dass sich auch Gargut 10 auf dieser Kontaktfläche befindet.

In der Fig. 2 ist dargestellt, dass zumindest eine der zumindest zwei Kontaktflächen 110 zumindest zwei Heizzonen 115 aufweisen können, welche elektrisch antreibbar sind, um das Gargut 10 zu erhitzen, und nur diejenigen Heizzonen 115 elektrisch angetrieben werden, die mit dem Gargut 10 in Kontakt stehen.

Dabei können die Heizzonen 115 sowohl einzeln, also auch in Bereichen, die mehrere Heizzonen 115 umfassen, angesteuert werden.

Es kann jedoch ebenfalls (nicht in Fig. 2 dargestellt) vorgesehen sein, dass die gesamte Kontaktfläche 110 eine einzige (durchgehende / fortlaufende) Heizzone 115 aufweist.

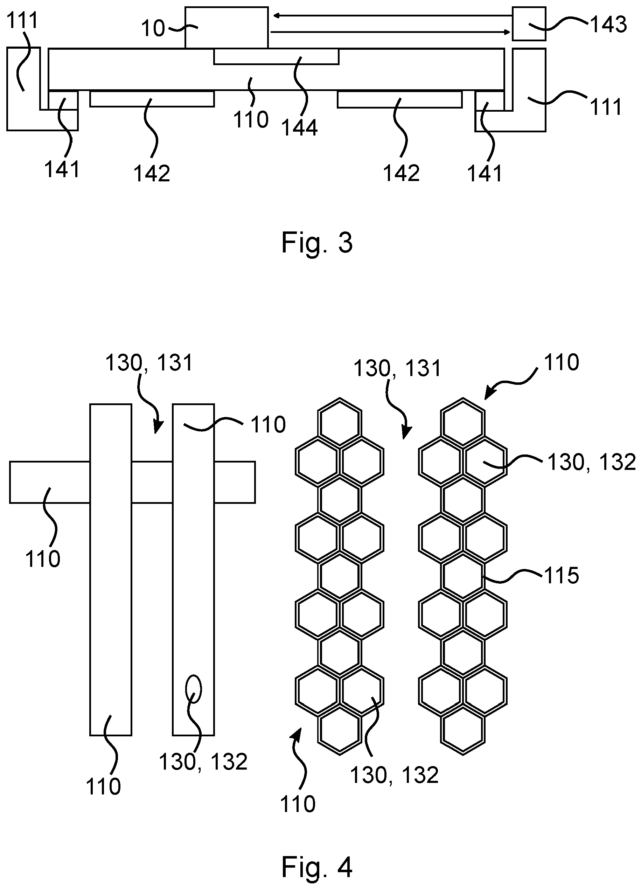

In der Fig. 3 ist die Gargutsensorik 140 im Detail in einer Seitenansicht dargestellt. Dabei umgeben die einzelnen Elemente der Gargutsensorik 140 die Kontaktfläche 110, die im gezeigten Ausführungsbeispiel auf einem Rahmen 111 aufliegt.

Die Gargutsensorik 140 kann zumindest einen Gewichtssensor 141 umfassen, der dazu ausgeführt ist, das auf zumindest einer der zumindest zwei Kontaktflächen 110 lastende Gewicht zu bestimmen. In der Fig. 3 sind zwei Gewichtssensoren 141 an jeweils einem Ende der Kontaktfläche 110 zwischen der Kontaktfläche 110 und dem Rahmen 111 angeordnet. So kann das auf der Kontaktfläche 110 aufliegende Gewicht einfach bestimmt werden.

Ferner ist dargestellt, dass die Gargutesensorik 140 zumindest einen Dehnungsmessstreifen 142 umfasst, der dazu ausgeführt ist, die Durchbiegung zumindest einer der zumindest zwei Kontaktflächen 110 zu bestimmen. In der Fig. 3 sind zwei Dehnungsmessstreifen 142 gezeigt, welche jeweils in einem Endbereich der Kontaktfläche 110 vorgesehen sind.

Es kann vorgesehen sein, dass jeder oder nur einige der zumindest zwei Kontaktflächen 110 einen oder mehrere Gewichtssensoren 141 und/oder Dehnungsmessstreifen 142 umfasst, um zu bestimmen, auf welchen Kontaktflächen 110 das Gargut 10 aufliegt.

Es kann vorgesehen sein, dass eine Temperatur oder eine Heizkurve der einzelnen Heizzonen 115 ausgewertet werden, um zu prüfen, ob dort Gargut 10 auf der Kontaktfläche 110 aufliegt. Hierdurch kann die Erkennung verbessert werden. Es kann ebenfalls vorgesehen sein, dass die von den Gewichtssensoren 141 und/oder Dehnungsmessstreifen 142 und/oder der Heizzone 115 erfassten Daten miteinander kombiniert werden. Damit kann eine besonders genaue Garguterkennung gewährleistet werden.

In der Fig. 3 sind noch weitere Elemente der Gargutsensorik 140 gezeigt. Es kann vorgesehen sein, dass die Gargutsensorik 140 ein Thermometer 144 aufweist, welches dazu ausgeführt ist, den Garzustand des Gargutes 10 zu bestimmen, und/oder dass die Gargutsensorik 140 eine Garguterkennung 143 umfasst, die dazu ausgeführt ist, die Art des Gargutes 10, das mit zumindest einer der Kontaktflächen 110 in Kontakt ist, zu bestimmen.

In der Fig. 3 ist das Thermometer 144 als Kontaktthermometer 144 innerhalb der Kontaktfläche 110 angeordnet. Dies ermöglicht eine direkte Messung der Temperatur am Gargut 10. Es kann jedoch auch vorgesehen sein, dass das Thermometer 144 kontaktlos, insbesondere als Pyrometer ausgeführt ist. Dann könnte es z.B. am Rand der Kontaktfläche 110 angeordnet sein (wie in der Fig. 3 die Garguterkennung 143).

Es kann ferner vorgesehen sein, dass das Thermometer 144 mobil, insbesondere drahtlos ausgeführt ist, um den Garzustand des Gargutes 10, insbesondere anhand der Kerntemperatur des Gargutes 10 zu bestimmen.

Die Garguterkennung 143 ist neben der Kontaktfläche 110 und oberhalb des Rahmens 111 derart angeordnet, dass eine Sichtlinie zum Gargut 10 freibleibt. Hierdurch kann das Gargut optisch erkannt werden. Dazu kann die Garguterkennung 143 als Kamera, insbesondere IR-Kamera, ausgeführt sein. Es kann jedoch auch vorgesehen sein, dass die Garguterkennung 143 als ein kapazitiver Sensor, insbesondere in der Kontaktfläche 110, und/oder als Ultraschallsensor ausgeführt ist.

Es wird nun Bezug auf die Fig. 4 genommen. Dort ist veranschaulicht, dass zumindest eine Öffnung 130 vorgesehen ist, die dazu ausgeführt ist, Flüssigkeit von den zumindest zwei Kontaktflächen 110 abzuführen.

Durch das Vorsehen einer Öffnung wird erreicht, dass eine Flüssigkeitsschicht, die sich typischerweise zwischen Gargut 10 und der Kontaktfläche 110 bildet, direkt abgeführt wird, bzw. gar nicht erst entsteht (Wasser tropft sofort ab). Mit anderen Worten wird die Flüssigkeitsschicht zwischen Gargut 10 und der Wärmequelle schnell abtransportiert.

Die Kontaktflächen 110 können auf unterschiedliche Weisen ausgeführt sein. Es kann vorgesehen sein, dass diese wie in der linken Hälfte der Fig. 4 im Wesentlichen linienförmig ausgebildet sind und/oder wie in der rechten Hälfte der Fig. 4 dargestellt zumindest eine der zumindest zwei Kontaktflächen 110 eine Gitterstruktur aufweist.

Darüber hinaus sind auch Kombinationen bei den unterschiedlich ausgestalteten Kontaktflächen 110 denkbar, so weist beispielsweise die wabenförmige Gitterstruktur der rechten Seite der Fig. 4 insgesamt eine Linienform auf. Auch ist es möglich, dass die wabenförmige Struktur der Kontaktflächen 110 durch einzelne (bogenförmige) Streben ausgebildet ist. Es kann jedoch auch vorgesehen sein, dass die Wabenstruktur vollflächig ausgeführt ist, sodass die einzelnen Kontaktflächen 110 aneinanderstoßen und insbesondere optisch nicht als getrennte Flächen wahrgenommen werden.

Im linken Teil ist zudem noch exemplarisch eine dritte Kontaktfläche 110 dargestellt, welche im vorliegenden Fall im 90° Winkel (wobei auch andere Winkel verwendet werden können) zu den zumindest zwei Kontaktflächen 110 verläuft. Durch weitere derart angeordnete Kontaktflächen 110 kann ebenfalls eine Gitterstruktur erzeugt werden.

Es kann vorgesehen sein, dass die Kontaktflächen 110 einzeln beheizbar ausgeführt sind.

Die in Fig. 4 gezeigten Waben, können ebenfalls einzeln (z.B. als eine selbständige Heizzone 115) ansteuerbar ausgeführt sein. Es kann vorgesehen sein, dass die Waben eine Länge zwischen 0,5 und 9 cm aufweisen. Durch derart ausgeführte Waben kann eine besonders genaue Erwärmung des Gargutes erfolgen. Dadurch, dass nur diejenigen Waben beheizt (betrieben) werden, wo auch Gargut 10 aufliegt, wird zudem Energie eingespart.

Darüber hinaus verdeutlich die Fig. 4 auch die unterschiedlichen (geometrischen) Arten der Öffnungen 130, die vorgesehen sein können.

Es kann vorgesehen sein, dass die zumindest eine Öffnung 130 als zumindest eine Flächenöffnung 131 ausgebildet ist, welche zwischen den zumindest zwei Kontaktflächen 110 angeordnet und dazu ausgeführt ist, beim Erhitzen des Gargutes 10 austretende Flüssigkeit abzuführen. Dies ist sowohl bei den linienförmigen Kontaktflächen 110 links als auch bei den gitterförmigen Kontaktflächen 110 rechts dargestellt. Die Flächenöffnungen 131 entsprechen dabei dem freien Platz zwischen zwei Kontaktflächen 110.

Alternativ oder in Ergänzung kann die zumindest eine Öffnung 130 als zumindest eine Innenöffnung 132 ausgebildet sein, welche innerhalb zumindest einer der zumindest zwei Kontaktflächen 110 angeordnet und dazu ausgeführt ist, beim Erhitzen des Gargutes 10 austretende Flüssigkeit abzuführen. Dies ist exemplarisch bei den linienförmigen Kontaktflächen 110 als eine innere Öffnung 132 am unteren Ende der rechten Kontaktfläche 110 dargestellt. Bei den wabenförmigen Kontaktflächen 110 können die Innenöffnungen 132 durch die innere Fläche der Wabe gebildet werden. Das gleiche Prinzip ist auch auf alle anderen Vieleckförmigen von gitterförmigen Kontaktflächen 110 anwendbar.

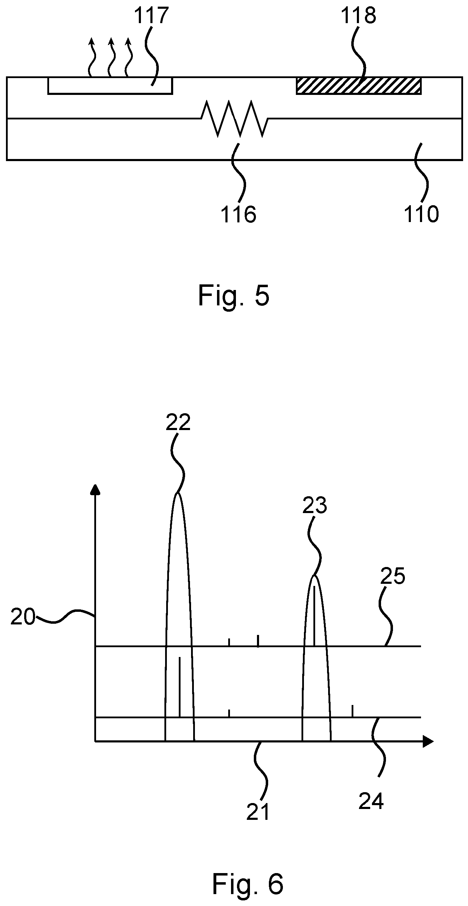

In der Fig. 5 sind unterschiedliche Arten dargestellt, wie die Kontaktflächen 110 beheizt werden können. Zumindest eine der zumindest zwei Kontaktflächen 110 kann eine elektrische Widerstandsheizung 116 und/oder eine Strahlungsheizung 117 und/oder eine Dickschichtheizung 118 aufweisen.

Insbesondere, wenn die Kontaktflächen 110 linienförmig ausgebildet sind, können diese Kontaktflächen 100 als Widerstandsheizung 116, die in gängigen Heizgeräten zum Einsatz kommen, z.B. Wasserkocher, ausgebildet sein. Ein Vorteil dieser Beheizung der Kontaktflächen 110 ist, dass das austretende Wasser (Hydrationsschicht) aus dem Gargut 10 direkt zwischen den Kontaktflächen 110 ablaufen kann. Auf diese Weise wird verhindert, dass dieses Wasser erhitzt oder sogar verdampft wird, was einen erheblichen Energieaufwand verursachen würde.

Bei einer Widerstandsheizung 116 wird Wärme erzeugt, indem ein leitfähiges Material von Strom durchflossen wird und sich durch die Joulesche Wärme erhitzt. Widerstandsheizungen 116 sind breit verfügbar und können daher kostengünstig hergestellt werden.

Es kann vorgesehen sein, dass die Widerstandsheizung 116 innerhalb der Kontaktfläche 110 angeordnet ist. Insbesondere kann die Widerstandsheizung 116 von einem spülmaschinenfesten Material, insbesondere Edelstahl, umgeben oder aus diesem gefertigt sein. Durch die Anordnung im Inneren der Kontaktfläche 110 oder einer Fertigung aus spülmaschinenfestem Material wird der Vorteil erreicht, dass die Kontaktfläche insgesamt leicht (und ggf. maschinell) reinigbar ist.

Eine Strahlungsheizung 117 kann auch als Wärmewellenheizung 117 bezeichnet werden und ist derart ausgeführt, dass die Wärmeabgabe überwiegend durch Strahlung in Form von Wärmestrahlung, insbesondere im Infrarotbereich, erfolgt. Strahlungsheizungen 117 bieten den Vorteil, dass diese auch größere Wärmemengen an Gargut 10 abgeben können, ohne dass sich die Temperatur der Strahlungsheizung 117 selbst verringert.

Es kann vorgesehen sein, dass das Strahlungsspektrum der Strahlungsheizung 117 auf zumindest ein Gargut 10 abgestimmt ist. Prinzipiell ist zu jedem Gargut 10 ein optimaler Strahlungsbereich aus dem Strahlungsspektrum, insbesondere der Infrarotstrahlung, bekannt. Das liegt daran, dass die chemische Zusammensetzung des Gargut 10 bekannt ist und das den einzelnen chemischen Gruppen, die das Gargut 10 aufweist, eine maximale Absorptionswellenlänge zugeordnet werden kann. Durch die Abstimmung des Spektrums der Strahlungsheizung 117 auf das Gargut 10 lässt sich eine besonders effiziente Absorption erreichen, wodurch Energie eingespart werden kann.

Es kann ebenfalls vorgesehen sein, dass die Kontaktfläche eine Dickschichtheizung 118 aufweist. Eine Dickschichtheizung 118 funktioniert prinzipiell wie eine Widerstandsheizung 116, wobei der die elektrische Leistung jedoch in einem Widerstand abfällt, der in Form einer Schicht auf einen Körper aufgetragen ist.

Die weiteren Möglichkeiten, eine Strahlungsheizung 117 auszugestalten, sind in der Fig. 6 verdeutlicht. Dort ist auf der x-Achse 21 die Wellenlänge und auf der y-Achse 20 die Intensität (ohne Einheit) aufgetragen.

Die Strahlungsheizung 117 kann dazu ausgeführt sein, zumindest zwei unterschiedliche Wellenlängen 22, 23 abzustrahlen, wobei insbesondere die Gargutsensorik 140 dazu ausgeführt ist, zumindest eine der zumindest zwei unterschiedlichen Wellenlängen 22, 23 der Strahlungsheizung 117 auszuwählen.

Über das vom Benutzer gewählte Rezept und/oder durch die Gargutsensorik 140 ist das Gargut 10 bekannt. Prinzipiell ist auch zu jedem Gargut 10 ist ein optimaler Strahlungsbereich aus dem Strahlungsspektrum der Infrarotstrahlung bekannt. Dies liegt daran, dass durch die Zusammensetzung des Gargutes 10 die chemischen Bestandteile des Gargutes 10 die Strahlung besonders gut absorbieren. Die Strahlungsheizung 117 wird bezogen auf die Wellenlänge so eingestellt, dass nur der Strahlungsbereich mit hoher Absorption durch das aufgelegte Gargut 10 absorbiert wird.

Dies macht die Arbeitsweise der Garvorrichtung 100 besonders effizient, da nicht benötigte Strahlungsbereiche vermieden werden.

In der Fig. 6 hat die Strahlungsheizung 117 eine erste Wellenlänge 22 und eine zweite Wellenlänge 23, mit der diese Wärmestrahlung abgeben kann. Daneben sind noch ein erstes Absorptionsspektrum 24 und ein zweites Absorptionsspektrum 25 gezeigt, wobei diese beiden Absorptionsspektren 24, 25 zwei unterschiedlichen Gargütern entsprechen. In dem Beispiel der Fig. 6 passt die erste Wellenlänge 22 besser zum ersten Absorptionsspektrum 24 und die zweite Wellenlänge 23 besser zum zweiten Absorptionsspektrum 25. In der Darstellung sind die Absorptionsspektren sehr schmalbandig dargestellt, um die Lesbarkeit des Diagramms zu erhöhen. Je nach aufgelegtem Gargut 10 können sich diese Spektren jedoch erheblich unterscheiden und auch breite Bänder enthalten.

Ferner ist es mit der Erfindung möglich, das Garverhalten des Garguts 10 zu optimieren. Z.B. können bevorzugt Lipide die Strahlung absorbieren (Absorptionsmaximum Wellenlänge 5,71 bis 5,76 µm). Auch ist es möglich, eine Strahlungsheizung 117 vorzusehen, welche zumindest bei 2 µm (z.B. für wässrige Lebensmittel, z.B. Gemüse) und/oder bei 3 µm (z.B. für Fleisch und Käse) und/oder bei 4 µm (z.B. für Lebensmittel mit ungesättigten Fetten, z.B. Avocados) eine Strahlung aussenden kann. Hierdurch können insbesondere die erwähnten Lebensmittel besonders effizient gegart werden.

Es kann auch vorgesehen sein, dass eine Strahlungsheizung 117 vorgesehen ist, die eine mittlere Wellenlänge aussendet, welche für besonders viele Gargüter 10 geeignet ist. Als besonders geeignet, haben sich Strahler in einem Wellenlängenbereich von 2-12 µm, insbesondere 2-4 µm, erwiesen.

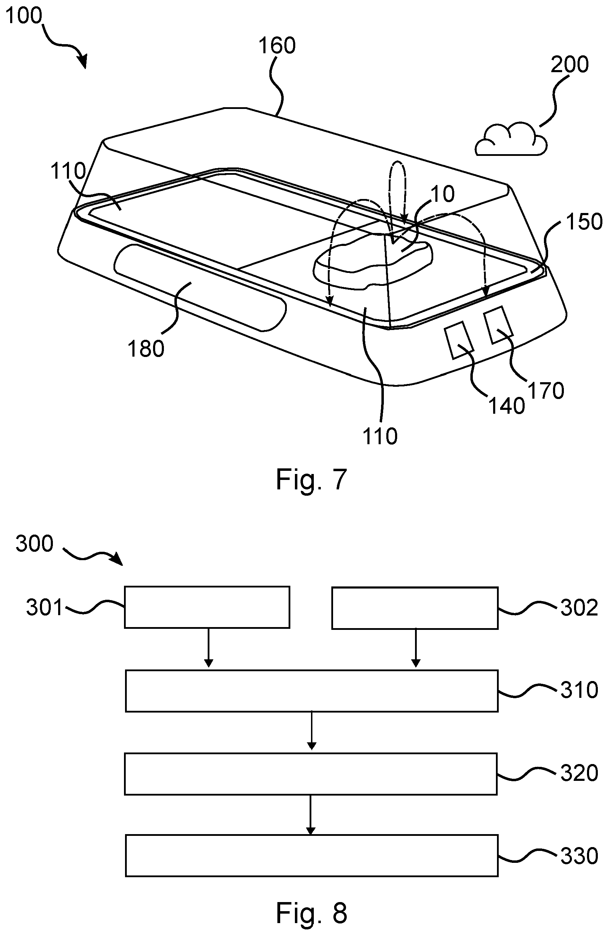

Des Weiteren kann vorgesehen sein, dass eine Absaugung 150 vorgesehen ist, welche dazu ausgeführt ist, beim Garen des Gargutes 10 entstehende Wrasen abzusaugen. Eine solche Garvorrichtung 100 mit Absaugung 150 ist in der perspektivischen Ansicht der Fig. 7 gezeigt. Wie dort zu erkennen ist, werden die ausgehend vom Gargut 10 aufsteigenden Wrasen abgelenkt und von der Absaugung 150 abgesaugt.

Es kann vorgesehen sein, dass die Absaugung 150 einen Lüfter und/oder einen Filter, insbesondere einen Aktivkohlefilter, aufweist. Durch diese Elemente werden entstehende Gerüche sofort neutralisiert bzw. abgeführt. Ferner kann vorgesehen sein, dass die Absaugung 150, insbesondere der Lüfter, durch den Benutzer manuell aktivierbar und/oder deaktivierbar ist. Hierdurch wird das Kocherlebnis für den Benutzer weiter verbessert, da z.B. je nach Aufstellort der Garvorrichtung 100 ein Betrieb der Absaugung 150 mehr (in Innenräumen) oder weniger (draußen) erforderlich ist.

Es kann, wie in der Fig. 7 dargestellt, vorgesehen sein, dass die (randseitige) Absaugung 150 seitlich von den Kontaktflächen 110 angeordnet ist. Durch die besonders nahe Anordnung am Gargut 10 kann die Luft besonders effizient abgesaugt und gereinigt werden. Ein Austritt für die angesaugte Luft kann an einer Außenseite der Garvorrichtung 100 vorgesehen sein. Ferner kann die Absaugung 150 auch im Umluftbetrieb betrieben werden. Es kann ebenfalls vorgesehen sein, dass die Absaugung 150 einen Kondenswasserbehälter aufweist, an welchem Kondenswasser gesammelt werden kann.

Wie ebenfalls in der Fig. 7 zu sehen ist, kann auch eine Haube 160, bevorzugt zumindest teilweise oder vollständig aus Glas, vorgesehen sein, welche dazu ausgeführt ist, die zumindest zwei Kontaktflächen 110 und mit den Kontaktflächen 110 in Kontakt bringbares Gargut 10 abzudecken. Durch die Haube werden die Geruchsabführung und das Nachgaren des Gargutes 10 verbessert.

Es kann vorgesehen sein, dass die Haube 160 eine Wärmeisolation aufweist. Hierdurch wird weniger Wärme an die Umgebung abgegeben, wodurch weitere Energie eingespart werden kann. Die Haube 160 kann doppelwandig und/oder mit einer wärmestrahlungsreflektierenden Schicht ausgeführt sein. Hierdurch ergibt sich eine gute Wärmeisolation.

Ferner kann die Haube 160 ein Heizelement, insbesondere eine Haubenstrahlungsheizung umfassen. Hierdurch kann das Kochergebnis weiter verbessert werden.

Ebenfalls in der Fig. 7 zu sehen ist, dass die Garvorrichtung 100 eine Kommunikationsschnittstelle 170 umfassen kann, welche dazu ausgeführt ist, Rezepte von einem Server 200 abzurufen und zumindest eine der zumindest zwei Kontaktflächen 110 entsprechend eines abgerufenen Rezeptes zu steuern. Die Kommunikationsschnittstelle 170 kann ferner auch mit einem mobilen Endgerät des Benutzers, beispielsweise einem Smartphone oder einem Tablet, verbunden werden, sodass die Garvorrichtung 100 auch durch dieses Endgerät gesteuert werden kann.

Die Fig. 8 veranschaulicht ein Verfahren 300 zum Garen, insbesondere zum Grillen, eines Gargutes 10, insbesondere mit einer Garvorrichtung 100 gemäß der Erfindung. Das Verfahren 300 umfasst ein in Kontakt bringen 310 eines Gargutes 10 mit zumindest einer von zumindest zwei Kontaktflächen 110, ein Erkennen 320, durch eine Gargutsensorik 140, mit welcher der zumindest zwei Kontaktflächen 110 das Gargut 10 in Kontakt steht, sowie ein individuelles elektrisches Antreiben 330, durch die Gargutsensorik 140, der Kontaktflächen 110, die als mit dem Gargut in Kontakt stehend Erkannt sind, um das Gargut 10 zu erhitzen.

Die Ermittlung der Parameter zum Betrieb der Kontaktflächen 110 kann zumindest anhand von Gleichungen, mathematischen Modellen, validierten experimentellen Parametern oder live-Daten eines externen Sensors der Gargutsensorik 140 erfolgen.

Durch eine derartige, smarte Ansteuerung der Kontaktflächen 110 wird das Gargut 10 optimal zubereitet.

Es kann vorgesehen sein, dass die Kontaktflächen 110 und/oder Heizzonen 115 nicht vollständig abgeschaltet werden, sondern dass eine Temperatur eingestellt wird, die optimal zum Warmhalten und/oder zum Nachgaren (Trockenes Sous Vide) des Gargutes 10 erforderlich ist.

Es ist ferner denkbar, dass beim Verfahren 300 ein Auswählen eines Rezeptes 301, das zumindest das Garen eines Gargutes 10 umfasst, vorgesehen ist, wobei das individuelle elektrische Antreiben 330 der Kontaktflächen 110 spezifisch zu dem im Rezept vorgesehen Gargut 10 ist.

Ein Verfahren 300 zum Garen von Gargut 10 kann beispielsweise wie folgt ablaufen:
Ein Rezept zum Garen von Gargut 10 ist z.B. auf einem Server 200 in einem digitalen Rezeptportal hinterlegt. Ein Benutzer wählt eines der Rezepte aus. Die Rezepte können neben Zutaten, die dem Gargut 10 entsprechen, Folgendes umfassen:
- eine Maximaltemperatur der Kontaktflächen 110 und/oder der Heizzonen 115,
- Kerntemperaturen bezogen auf die Garzustände,
- -Dauer des Energieeintrages abhängig vom Gargut 10 (Fleisch, Gemüse, Obst) und/oder Gargutgröße und/oder Gargutgewicht.

Der Benutzer legt das Gargut 10 entsprechend der Anweisungen, welche z.B. auf der Eingabe/Ausgabeschnittstelle 180, insbesondere in Form eines Displays, erscheinen, auf die Kontaktflächen 110. Im Anschluss werden die Kontaktflächen 110 und/oder die Heizzonen 115 entsprechend des Rezeptes (durch eine Steuereinheit der Garvorrichtung 100) spezifisch zum aufgelegten Gargut 10 gesteuert.

Es kann ferner vorgesehen sein, dass ein Auswählen einer Garstufe 302 des Gargutes 10 (durch den Benutzer) vorgesehen ist, wobei das individuelle elektrische Antreiben 330 der Kontaktflächen 110 spezifisch zu der ausgewählten Garstufe des Gargutes 10 ist.

Mit anderen Worten wird der Benutzer, insbesondere über die Eingabe/Ausgabeschnittstelle 180, abgefragt, welchen Garzustand er bevorzugt (medium, rare, englisch etc). Der Benutzer kann auch mittels eines auf einem Display angezeigten Bildes abgefragt werden, welchen Garzustand er bevorzugt. Im Anschluss kann anhand des gewählten Garzustandes die Steuerung der Kontaktflächen 110 und/oder der Heizzonen 115 (durch die Steuereinheit) derart durchgeführt werden, dass der gewählte Garzustand des Gargutes 10 erreicht wird. Es kann vorgesehen sein, dass der Benutzer bei Erreichen des gewählten Garzustandes über die Eingabe/Ausgabeschnittstelle 180 und/oder über ein mobiles Endgerät des Benutzers benachrichtigt wird.

Die voranstehende Erläuterung der Ausführungsformen beschreibt die vorliegende Erfindung ausschließlich im Rahmen von Beispielen.

### Bezugszeichenliste

- 10: Gargut

- 20: Intensität
- 21: Wellenlänge
- 22: erste Wellenlänge
- 23: zweite Wellenlänge
- 24: erstes Absorptionsspektrum
- 25: zweites Absorptionsspektrum

- 100: Garvorrichtung

- 110: Kontaktflächen
- 111: Rahmen
- 115: Heizzonen
- 116: Widerstandsheizung
- 117: Strahlungsheizung
- 118: Dickschichtheizung

- 120: Kontaktebene

- 130: Öffnung
- 131: Flächenöffnung
- 132: Innenöffnung oder innere Öffnung

- 140: Gargutsensorik
- 141: Gewichtssensor
- 142: Dehnungsmessstreifen
- 143: Garguterkennung
- 144: Thermometer

- 150: Absaugung

- 160: Haube
- 170: Kommunikationsschnittstelle
- 180: Eingabe/Ausgabe Schnittstelle

- 200: Server

- 300: Verfahren
- 301: Auswählen eines Rezeptes
- 302: Auswählen einer Garstufe

- 310: in Kontakt bringen
- 320: Erkennen
- 330: individuelles elektrisches Antreiben

## Patentansprüche

1. Garvorrichtung (100) zum Garen, insbesondere zum Grillen, von Gargut (10), aufweisend:
- zumindest zwei Kontaktflächen (110) die dazu ausgeführt sind, mit dem Gargut (10) in Kontakt zu kommen,
- eine Gargutsensorik (140), die dazu ausgeführt ist, zu erkennen, mit welcher der zumindest zwei Kontaktflächen (110) das Gargut (10) in Kontakt steht,
wobei die zumindest zwei Kontaktflächen (110) individuell elektrisch antreibbar sind, um das Gargut (10) zu erhitzen, und nur diejenigen der zumindest zwei Kontaktflächen (110) elektrisch angetrieben werden, die mit dem Gargut (10) in Kontakt stehen, **dadurch gekennzeichnet, dass** zumindest eine Öffnung (130) vorgesehen ist, die dazu ausgeführt ist, Flüssigkeit von den zumindest zwei Kontaktflächen (110) abzuführen.

2. Garvorrichtung (100) nach Anspruch 1,
**dadurch gekennzeichnet,**
**dass** zumindest eine der zumindest zwei Kontaktflächen (110) zumindest zwei Heizzonen (115) aufweist, welche elektrisch antreibbar sind, um das Gargut (10) zu erhitzen, und nur diejenigen Heizzonen (115) elektrisch angetrieben werden, die mit dem Gargut (10) in Kontakt stehen.

3. Garvorrichtung (100) nach Anspruch 1 oder 2,
**dadurch gekennzeichnet,**
**dass** die Gargutsensorik (140) zumindest einen Gewichtssensor (141) umfasst, der dazu ausgeführt ist, das auf zumindest einer der zumindest zwei Kontaktflächen (110) lastende Gewicht zu bestimmen, und/oder
**dass** die Gargutsensorik (140) zumindest einen Dehnungsmessstreifen (142) umfasst, der dazu ausgeführt ist, die Durchbiegung zumindest einer der zumindest zwei Kontaktflächen (110) zu bestimmen.

4. Garvorrichtung (100) nach einem der vorhergehenden Ansprüche,
**dadurch gekennzeichnet,**
**dass** die Gargutsensorik (140) ein Thermometer (144) aufweist, welches dazu ausgeführt ist, den Garzustand des Gargutes (10) zu bestimmen, und/oder dass die Gargutsensorik (140) eine Garguterkennung (143) umfasst, die dazu ausgeführt ist, die Art des Gargutes (10), das mit zumindest einer der Kontaktflächen (110) in Kontakt ist, zu bestimmen.

5. Garvorrichtung (100) nach einem der vorhergehenden Ansprüche,
**dadurch gekennzeichnet,**
**dass** die zumindest eine Öffnung (130) als zumindest eine Flächenöffnung (131) ausgebildet ist, welche zwischen den zumindest zwei Kontaktflächen (110) angeordnet und dazu ausgeführt ist, beim Erhitzen des Gargutes (10) austretende Flüssigkeit abzuführen, und/oder
**dass** die zumindest eine Öffnung (130) als zumindest eine Innenöffnung (132) ausgebildet ist, welche innerhalb zumindest einer der zumindest zwei Kontaktflächen (110) angeordnet und dazu ausgeführt ist, beim Erhitzen des Gargutes (10) austretende Flüssigkeit abzuführen.

6. Garvorrichtung (100) nach einem der vorhergehenden Ansprüche,
**dadurch gekennzeichnet,**
**dass** zumindest eine der zumindest zwei Kontaktflächen (110) im Wesentlichen linienförmig ausgebildet ist und/oder
**dass** zumindest eine der zumindest zwei Kontaktflächen (110) eine Gitterstruktur aufweist.

7. Garvorrichtung (100) nach einem der vorhergehenden Ansprüche,
**dadurch gekennzeichnet,**
**dass** zumindest eine der zumindest zwei Kontaktflächen (110) eine elektrische Widerstandsheizung (116) und/oder eine Strahlungsheizung (117) und/oder eine Dickschichtheizung (118) aufweist.

8. Garvorrichtung (100) nach einem der vorhergehenden Ansprüche,
**dadurch gekennzeichnet,**
**dass** zumindest eine der zumindest zwei Kontaktflächen (110) eine Strahlungsheizung (117) aufweist, wobei die Strahlungsheizung (117) dazu ausgeführt ist, zumindest zwei unterschiedliche Wellenlängen (22, 23) abzustrahlen, wobei insbesondere die Gargutsensorik (140) dazu ausgeführt ist, zumindest eine der zumindest zwei unterschiedlichen Wellenlängen (22, 23) der Strahlungsheizung (117) auszuwählen.

9. Garvorrichtung (100) nach einem der vorhergehenden Ansprüche,
**dadurch gekennzeichnet,**
**dass** eine Absaugung (150) vorgesehen ist, welche dazu ausgeführt ist, beim Garen des Gargutes (10) entstehende Wrasen abzusaugen, und/oder
**dass** eine Haube (160) vorgesehen ist, welche dazu ausgeführt ist, die zumindest zwei Kontaktflächen (110) und mit den Kontaktflächen (110) in Kontakt bringbares Gargut (10) abzudecken.

10. Garvorrichtung (100) nach einem der vorhergehenden Ansprüche,
**dadurch gekennzeichnet,**
**dass** eine Kommunikationsschnittstelle (170) vorgesehen ist, welche dazu ausgeführt ist, Rezepte von einem Server (200) abzurufen und zumindest eine der zumindest zwei Kontaktflächen (110) entsprechend eines abgerufenen Rezeptes zu steuern.

11. Verfahren (300) zum Garen, insbesondere zum Grillen, eines Gargutes (10), mit einer Garvorrichtung (100) nach einem der vorhergehenden Ansprüche, umfassend:
- In Kontakt bringen (310) eines Gargutes (10) mit zumindest einer von zumindest zwei Kontaktflächen (110),
- Erkennen (320), durch eine Gargutsensorik (140), mit welcher der zumindest zwei Kontaktflächen (110) das Gargut (10) in Kontakt steht,
- Individuelles elektrisches Antreiben (330), durch die Gargutsensorik (140), der Kontaktflächen (110), die als mit dem Gargut in Kontakt stehend Erkannt sind, um das Gargut (10) zu erhitzen.

12. Verfahren (300) zum Garen, nach Anspruch 11,
**dadurch gekennzeichnet,**
**dass** ein Auswählen eines Rezeptes (301), das zumindest das Garen eines Gargutes (10) umfasst, vorgesehen ist, wobei das individuelle elektrische Antreiben (330) der Kontaktflächen (110) spezifisch zu dem im Rezept vorgesehen Gargut (10) ist.

13. Verfahren zum Garen, nach Anspruch 11 oder 12,
**dadurch gekennzeichnet,**
**dass** ein Auswählen einer Garstufe (302) des Gargutes (10) vorgesehen ist, wobei das individuelle elektrische Antreiben (330) der Kontaktflächen (110) spezifisch zu der ausgewählten Garstufe des Gargutes (10) ist.

14. Computerprogrammprodukt, umfassend Befehle, die bewirken, dass die Vorrichtung nach einem der Ansprüche 1 bis 10, zumindest die folgenden Schritte ausführt:
- Erkennen (320), durch die Gargutsensorik (140), mit welcher der zumindest zwei Kontaktflächen (110) das Gargut (10) in Kontakt steht,
- Individuelles elektrisches Antreiben (330), durch die Gargutsensorik (140), der Kontaktflächen (110), die als mit dem Gargut in Kontakt stehend erkannt sind, um das Gargut (10) zu erhitzen.

## Claims

1. Cooking device (100) for cooking, in particular for grilling, food (10), comprising:
- at least two contact surfaces (110) which are designed to come into contact with the food (10),
- a food sensor system (140) which is designed to recognize which of the at least two contact surfaces (110) the food (10) is in contact with,
wherein the at least two contact surfaces (110) are individually electrically drivable in order to heat the food (10), and only those of the at least two contact surfaces (110) which are in contact with the food (10) are electrically driven,
**characterized in that**
at least one opening (130) is provided, which is designed to drain liquid from the at least two contact surfaces (110).

2. Cooking device (100) according to claim 1,
**characterized in that**
at least one of the at least two contact surfaces (110) has at least two heating zones (115) which can be driven electrically in order to heat the food (10), and only those heating zones (115) which are in contact with the food (10) are driven electrically.

3. Cooking device (100) according to claim 1 or 2,
**characterized in that**
the food sensor system (140) comprises at least one weight sensor (141) which is designed to determine the weight bearing on at least one of the at least two contact surfaces (110), and/or
**in that** the food sensor system (140) comprises at least one strain gauge (142) which is designed to determine the deflection of at least one of the at least two contact surfaces (110).

4. Cooking device (100) according to one of the preceding claims,
**characterized in that**
the food sensor system (140) has a thermometer (144) which is designed to determine the cooking state of the food (10) and/or
**in that** the food sensor system (140) comprises a food detection means (143) which is designed to determine the type of food (10) which is in contact with at least one of the contact surfaces (110).

5. Cooking device (100) according to one of the preceding claims,
**characterized in that**
the at least one opening (130) is designed as at least one surface opening (131), which is arranged between the at least two contact surfaces (110) and is designed to drain off liquid escaping when the food (10) is heated, and/or
**in that** the at least one opening (130) is designed as at least one internal opening (132), which is arranged within at least one of the at least two contact surfaces (110) and is designed to discharge liquid escaping when the food (10) is heated.

6. Cooking device (100) according to one of the preceding claims,
**characterized in that**
at least one of the at least two contact surfaces (110) is substantially linear in shape and/or
**in that** at least one of the at least two contact surfaces (110) has a grid structure.

7. Cooking device (100) according to one of the preceding claims,
**characterized in that**
at least one of the at least two contact surfaces (110) has an electrical resistance heater (116) and/or a radiant heater (117) and/or a thick-film heater (118).

8. Cooking device (100) according to one of the preceding claims,
**characterized in that**
at least one of the at least two contact surfaces (110) has a radiant heater (117), the radiant heater (117) being designed to radiate at least two different wavelengths (22, 23), in particular the food sensor system (140) being designed to select at least one of the at least two different wavelengths (22, 23) of the radiant heater (117).

9. Cooking device (100) according to one of the preceding claims,
**characterized in that**
an extraction unit (150) is provided, which is designed to extract vapors produced during cooking of the food (10), and/or
**in that** a hood (160) is provided, which is designed to cover the at least two contact surfaces (110) and food (10) which can be brought into contact with the contact surfaces (110).

10. Cooking device (100) according to one of the preceding claims,
**characterized in that**
a communication interface (170) is provided, which is designed to retrieve recipes from a server (200) and to control at least one of the at least two contact surfaces (110) in accordance with a retrieved recipe.

11. A method (300) for cooking, in particular grilling, a food (10), comprising a cooking device (100) according to one of the preceding claims, comprising:
- Bringing a food (10) into contact (310) with at least one of at least two contact surfaces (110),
- Detection (320), by a food sensor system (140), with which of the at least two contact surfaces (110) the food (10) is in contact,
- Individually electrically driving (330), by the food sensor system (140), the contact surfaces (110) which are recognized as being in contact with the food to be cooked in order to heat the food (10).

12. Method (300) for cooking, according to claim 11,
**characterized in that**
a selection of a recipe (301) comprising at least the cooking of a food (10) is provided, wherein the individual electrical driving (330) of the contact surfaces (110) is specific to the food (10) provided in the recipe.

13. A method of cooking according to claim 11 or 12,
**characterized in that**
a selection of a cooking stage (302) of the food (10) is provided, the individual electrical driving (330) of the contact surfaces (110) being specific to the selected cooking stage of the food (10).

14. A computer program product comprising instructions that cause the device according to any one of claims 1 to 10 to perform at least the following steps:
- Detection (320), by the food sensor system (140), of which of the at least two contact surfaces (110) the food (10) is in contact with,
- Individual electrical driving (330), by the food sensor system (140), of the contact surfaces (110) which are recognized as being in contact with the food to be cooked, in order to heat the food (10).

## Revendications

1. Dispositif de cuisson (100) pour la cuisson, en particulier la cuisson au gril, d'un produit à cuire (10), présentant :
- au moins deux surfaces de contact (110) qui sont adaptées pour entrer en contact avec le produit à cuire (10),
- un système de détection de produits à cuire (140) qui est conçu pour détecter avec laquelle des au moins deux surfaces de contact (110) le produit à cuire (10) est en contact,
dans lequel les au moins deux surfaces de contact (110) peuvent être entraînées électriquement individuellement pour chauffer le produit à cuire (10), et seules celles des au moins deux surfaces de contact (110) qui sont en contact avec le produit à cuire (10) sont entraînées électriquement,
**caractérisé en ce qu'**
au moins une ouverture (130) est prévue, qui est adaptée pour évacuer le liquide desdites au moins deux surfaces de contact (110).

2. Dispositif de cuisson (100) selon la revendication 1,
**caractérisé en ce qu'**
au moins l'une des au moins deux surfaces de contact (110) présente au moins deux zones de chauffage (115) qui peuvent être entraînées électriquement pour chauffer le produit à cuire (10), et seules les zones de chauffage (115) qui sont en contact avec le produit à cuire (10) sont entraînées électriquement.

3. Dispositif de cuisson (100) selon la revendication 1 ou 2,
**caractérisé en ce que**
le système de détection de produits à cuire (140) comprend au moins un capteur de poids (141) qui est conçu pour déterminer le poids pesant sur au moins une des au moins deux surfaces de contact (110), et/ou
**en ce que** le système de détection de produits à cuire (140) comprend au moins une jauge de contrainte (142) qui est conçue pour déterminer la flexion d'au moins une des au moins deux surfaces de contact (110).

4. Dispositif de cuisson (100) selon l'une des revendications précédentes,
**caractérisé en ce que**
le système de détection de produits à cuire (140) présente un thermomètre (144) qui est réalisé de manière à déterminer l'état de cuisson du produit à cuire (10) déterminer et/ou en ce que le système de détection de produits à cuire (140) comprend une reconnaissance de produits à cuire (143) qui est réalisée pour déterminer le type de produit à cuire (10) qui est en contact avec au moins une des surfaces de contact (110).

5. Dispositif de cuisson (100) selon l'une des revendications précédentes,
**caractérisé en ce que**
la au moins une ouverture (130) est réalisée sous la forme d'au moins une ouverture de surface (131) qui est disposée entre les au moins deux surfaces de contact (110) et qui est conçue pour évacuer le liquide qui s'échappe lors du chauffage du produit à cuire (10), et/ou
**en ce que** la au moins une ouverture (130) est réalisée sous la forme d'au moins une ouverture intérieure (132) qui est disposée à l'intérieur d'au moins l'une des au moins deux surfaces de contact (110) et qui est conçue pour évacuer le liquide qui s'échappe lors du chauffage du produit à cuire (10).

6. Dispositif de cuisson (100) selon l'une des revendications précédentes,
**caractérisé en ce qu'**
au moins l'une des au moins deux surfaces de contact (110) est réalisée essentiellement en forme de ligne et/ou
**en ce qu'**au moins l'une des au moins deux surfaces de contact (110) présente une structure de grille.

7. Dispositif de cuisson (100) selon l'une des revendications précédentes,
**caractérisé en ce qu'**
au moins l'une des au moins deux surfaces de contact (110) présente un chauffage par résistance électrique (116) et/ou un chauffage par rayonnement (117) et/ou un chauffage à couche épaisse (118).

8. Dispositif de cuisson (100) selon l'une des revendications précédentes,
**caractérisé en ce qu'**
au moins l'une des au moins deux surfaces de contact (110) présente un chauffage par rayonnement (117), le chauffage par rayonnement (117) étant réalisé de manière à rayonner au moins deux longueurs d'onde différentes (22, 23), le système de détection de produits à cuire (140) étant notamment réalisé de manière à sélectionner au moins l'une des au moins deux longueurs d'onde différentes (22, 23) du chauffage par rayonnement (117).

9. Dispositif de cuisson (100) selon l'une des revendications précédentes,
**caractérisé en ce qu'**
il est prévu un dispositif d'aspiration (150) qui est conçu pour aspirer les vapeurs produites lors de la cuisson du produit à cuire (10), et/ou
qu'il est prévu un capot (160) qui est conçu pour recouvrir les au moins deux surfaces de contact (110) et les produits à cuire (10) pouvant être mis en contact avec les surfaces de contact (110).

10. Dispositif de cuisson (100) selon l'une des revendications précédentes,
**caractérisé en ce qu'**
il est prévu une interface de communication (170) qui est réalisée pour appeler des recettes d'un serveur (200) et pour commander au moins l'une des au moins deux surfaces de contact (110) en fonction d'une recette appelée.

11. Procédé (300) de cuisson, en particulier de grillage, d'un produit à cuire (10), avec un dispositif de cuisson (100) selon l'une des revendications précédentes, comprenant :
- La mise en contact (310) d'un produit à cuire (10) avec au moins l'une d'au moins deux surfaces de contact (110),
- Détection (320), par un système de détection de produits à cuire (140), avec laquelle des au moins deux surfaces de contact (110) le produit à cuire (10) est en contact,
- L'entraînement électrique individuel (330), par le système de détection de produits à cuire (140), des surfaces de contact (110) qui sont reconnues comme étant en contact avec le produit à cuire, afin de chauffer le produit à cuire (10).

12. Procédé (300) de cuisson, selon la revendication 11,
**caractérisé en ce qu'**
il est prévu une sélection d'une recette (301) comprenant au moins la cuisson d'un produit à cuire (10), l'entraînement électrique individuel (330) des surfaces de contact (110) étant spécifique au produit à cuire (10) prévu dans la recette.

13. Procédé de cuisson, selon la revendication 11 ou 12,
**caractérisé en ce qu'**
il est prévu une sélection d'un niveau de cuisson (302) du produit à cuire (10), l'entraînement électrique individuel (330) des surfaces de contact (110) étant spécifique au niveau de cuisson sélectionné du produit à cuire (10).

14. Produit de programme d'ordinateur comprenant des instructions qui amènent le dispositif selon l'une quelconque des revendications 1 à 10 à exécuter au moins les étapes suivantes :
- Détection (320), par le système de détection de produits à cuire (140), avec laquelle des au moins deux surfaces de contact (110) le produit à cuire (10) est en contact,
- L'entraînement électrique individuel (330), par le système de détection de produits à cuire (140), des surfaces de contact (110) reconnues comme étant en contact avec le produit à cuire, afin de chauffer le produit à cuire (10).
